# EUROPEAN PATENT SPECIFICATION

(11) **EP 0 506 003 B1**
(45) Date of publication and mention of the grant of the patent: **10.01.1996**
(21) Application number: 92105112.4
(22) Date of filing: 25.03.1992
(51) Int. Cl.: G02B 6/38

(54) **Ferrule for optical fibers**
Endhülse für Glasfasern
Embout pour fibres optiques

(30) Priority: 28.03.1991 JP 63626/91
(43) Date of publication of application: 30.09.1992
(73) Proprietor: MUNEKATA CO., LTD., Takatuki-city, Osaka (JP)
(72) Inventor: Sato, Akira, Ikeda-city, Osaka (JP); Takemura, Kenji, Katano-city, Osaka (JP); Takatori, Toshimitsu, Moriguchi-city, Osaka (JP)
(74) Representative: Tiedtke, Harro, Dipl.-Ing.

(56) References cited:
- EP-A- 484 994
- DE-A- 2 516 858
- GB-A- 2 032 642
- US-A- 3 861 781
- US-A- 4 925 266
- US-A- 5 097 522

## Description

### BACKGROUND OF THE INVENTION

### 1. Field of the Invention:

The present invention relates to a ferrule to be used for the optical fiber connector.

### 2. Description of the Prior Art:

It is necessary to join optical fibers together to establish an optical fiber communications network. The joining of optical fibers is accomplished by the aid of an optical fiber connector. What is important in this joining procedure is to butt the ends of two fibers, with their axes aligned accurately, so that the transmission loss at the joint is minimized. On way of axial alignment is by fixing one end of each of two optical fibers at the center of each of paired long cylindrical ferrules and inserting the ferrules into an accurately machined sleeve such that the joining ends of the ferrules come into close contact with each other.

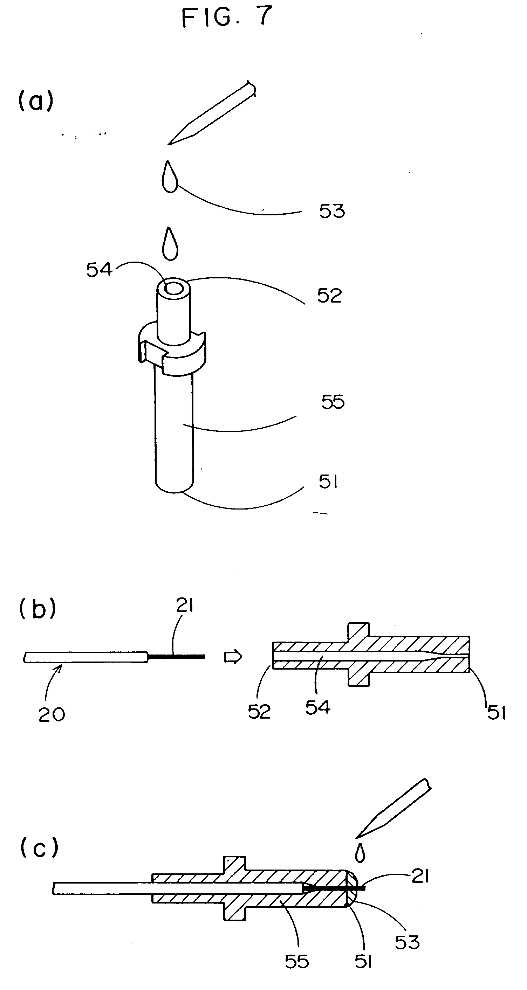

The joining of optical fibers by means of ferrules is by the explained with reference to Fig. 7 based on the Japanese provisional publication No. 3612/1989. The joining procedure starts with admitting an adhesive 53 into the ferrule 55 through one end 52 thereof into which an optical fiber cable is inserted, as shown in Fig. 7(a). One end of an optical fiber cable 20 is inserted into the through hole 54 as far as it projects from the splicing end 51, as shown in Fig. 7(b). An adhesive 53 is applied to that part of the optical fiber 21 which projects from the joining end 51 of the ferrule, as shown in Fig. 7(c). Finally, the adhesive 53 is dried and cured.

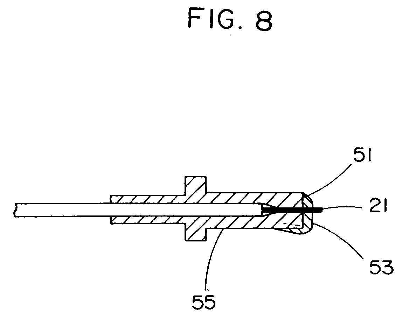

A disadvantage of the foregoing procedure is that the application of an adhesive 53 to the joining end 51 needs a delicate technique. Unskilled operation often ends up with the sticking of an adhesive 53 to the flank of the ferrule 55, as shown in Fig. 8. This leads to extremely low yields and efficiency in the operation of attaching an optical fiber 21 to a ferrule.

For the axes of optical fibers 21 to be accurately aligned to each other, it is necessary that the ferrule 55 be truly round. That part of the adhesive 53 which sticks to the flank of the ferrule 55 puts the accurately machined ferrule out of true roundness. This is the main cause of loss by splicing.

From the document US-A-3 861 781 a ferrule is known which consists of a cylindrical body having a through hole extending along its axis and a joining end face; said through hole permits one end of an optical fiber cable to be inserted thereinto such that it projects through said joining end face. The through hole is surrounded by an adhesive barrier which is formed such that the distance measured along the surface across the end face is greater than the diameter of the cylindrical body.

Furthermore, the document EP-A-484 994 which is claiming priority from the US-A-5 097 522 representing prior art according to Art. 54(3) EPC shows a fiber optic connector having planar end faces comprising a groove for the reception of the excess reflowed fiber material resulting from a hot plate melting step which was performed in order to form the planar end faces.

### SUMMARY OF THE INVENTION

It is an object of the present invention to provide a ferrule which prevents the adhesive from flowing to the flank of the ferrule after its application, thereby improving the yields and efficiency of splicing operation. This object is achieved by a ferrule comprising the features of Claim 1. Further improvements are subject matters of the appended dependent claims.

The ferrule of the present invention prevents the adhesive from flowing to its flank owing to the adhesive barrier which extends the distance along the surface from the opening of the through hole (from which the end of the optical fiber cable projects) to the flank. Therefore, the flank of the ferrule retains its roundness at the time of joining. This reduces the loss by joining and improves the efficiency and yield of optical fiber joining.

### BRIEF DESCRIPTION OF THE DRAWINGS

Fig. 1 is a perspective view showing a ferrule pertaining to the first embodiment of the present invention.

Fig. 2 is a sectional side view showing the forward end of the ferrule shown in Fig. 1.

Fig. 3 is a perspective view showing a ferrule pertaining to the second embodiment of the present invention.

Fig. 4 is a sectional side view showing the forward end of the ferrule shown in Fig. 3.

Fig. 5 is a perspective view showing a ferrule pertaining to the third embodiment of the present invention.

Fig. 6 is a sectional side view showing the forward end of the ferrule shown in Fig. 5.

Fig. 7 is an illustration showing how an optical fiber is fixed to a ferrule.

Fig. 8 is an illustration showing the problem involved in the prior art technology.

### DESCRIPTION OF THE PREFERRED EMBODIMENTS

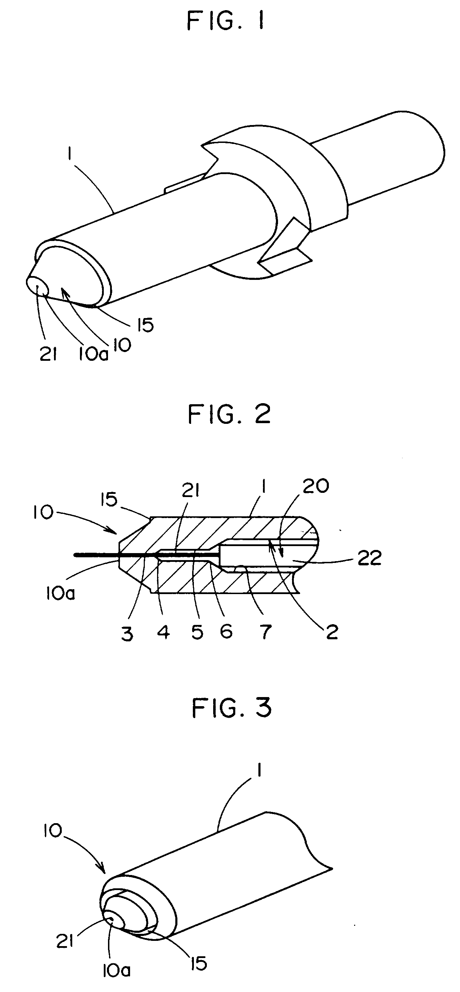

The ferrule pertaining to the first embodiment of the present invention will be explained with reference to Figs. 1 and 2. The ferrule is a cylindrical body constructed such that the flank 1 is fitted into a sleeve of an optical fiber connector (not shown). It has a through hole 2 along its axis into which one end 21 of an optical fiber cable 20 is inserted as far as the end 21 projects from the center of the joining end surface 10.

The joining end surface 10 takes on the shape of a truncated cone, with its top 10a being flat and having at its center the opening of the through hole 2. There is a flat part which connects the bottom of the truncated cone to the flank 1. This flat part functions as the adhesive barrier 15. Because of this adhesive barrier 15, the distance along the surface from one point on the flank 1 to the opposite point on the flank 1 via the center of the joining end surface 10a is greater than the diameter of the cylindrical body. The through hole 2 has three straight parts and two tapered parts, as shown in Fig. 2. The first straight part 3 opens at the joining end surface 10. It permits an optical fiber 21 to be snugly fitted. The second straight part 5 permits an optical fiber 21 to be loosely fitted. The first tapered part 4 is interposed between the first straight part 3 and the second straight part 5. The third straight part 7 opens at the base end 11 of the ferrule. It permits the jacketed optical fiber cable 22 to be inserted. The second tapered part 6 is interposed between the second straight part 5 and the third straight part 7. The ferrule may be made of any material, such as metal, ceramics, zirconia, and plastics, which are not specifically limited. Plastics are easy to form the joining end surface 10 and through hole 2 as mentioned above.

The ferrule as explained above is used in almost the same manner as shown in Fig. 7 for the joining of optical fibers. It permits the optical fiber 21 to be inserted smoothly into the first straight part 3, because the second straight part 5 has an inside diameter much larger than the outside diameter of the optical fiber 21 and the third straight part 7 has an inside diameter much larger than the outside diameter of the jacket of the optical fiber cable 22. Moreover, the smooth insertion is ensured by the first tapered part 4 and the second tapered part 6, both tapering off in the direction of insertion.

After the optical fiber 21 has been inserted into the ferrule, a small amount of adhesive is applied to that part of the optical fiber 21 which projects from the joining end surface 10. The adhesive is dried and cured. At the time of application, the adhesive does not flow to the flank 1 because there is the adhesive barrier 15 between the joining end surface 10 and the flank 1. The absence of the adhesive on the flank 1 of the ferrule keeps the flank 1 truly round. This leads to the reduction of loss by joining and the improved joining efficiency and yield. The foregoing ferrule will be produced with very little increase in production cost if an adequate molding material and method are selected.

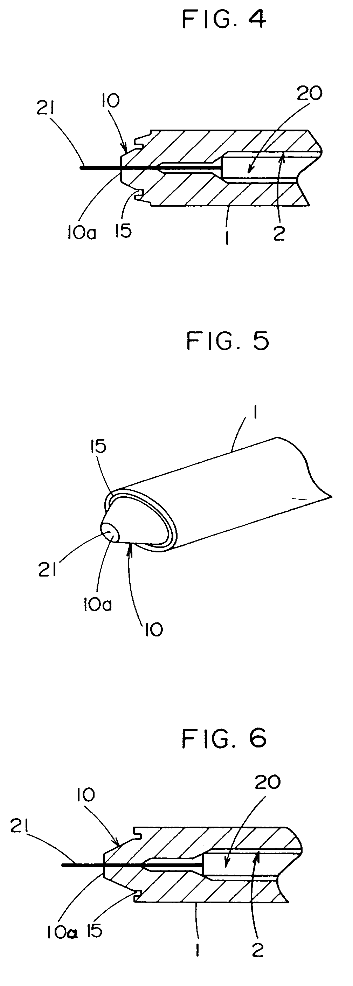

The ferrule pertaining to the second embodiment is shown in Figs. 3 and 4. This ferrule has the joining end surface 10 in the shape of a truncated cone having the flat top 10a. The slope of the truncated cone is surrounded by an annular groove 15 which functions as the adhesive barrier. Except this annular groove, it has the same structure and produces the same effect as the ferrule pertaining to the first embodiment. The adhesive barrier 15 in the form of annular groove prevents the adhesive from flowing to the flank 1.

The ferrule pertaining to the third embodiment is shown in Figs. 5 and 6. This ferrule has the joining end surface 10 in the shape of a truncated cone having the flat top 10a. The bottom of the truncated cone is surrounded by an annular groove 15 which functions as the adhesive barrier. Except this annular groove, it has the same structure and produces the same effect as the ferrule pertaining to the second embodiment.

Disclosed herein is a ferrule used to join optical fibers together. It is a cylindrical body having a through hole along its axis and a joining end surface. It permits one end of an optical fiber cable to be inserted into the through hole as far as it projects from the center of the joining end surface. The joining end surface is constructed such that the opening of the through hole is surrounded by an adhesive barrier. The adhesive barrier is formed such that the distance measured along the surface across the joining end surface is greater than the diameter of the cylindrical body. This structure prevents the adhesive applied to the joining end surface from flowing to the flank of the ferrule.

## Claims

1. A ferrule comprising
a cylindrical body having a through hole (2) extending along its axis and an end face, said through hole (2) permitting one end of an optical fiber cable (20) to be inserted thereinto such that it projects through said end face,
**characterized in that**
the end portion of the cylindrical body which comprises said end face takes the shape of a truncated cone, the peripheral surface of which is provided with a coaxial adhesive barrier (15) arranged to prevent adhesive applied to said end face from flowing along the cylinder surface of said cylindrical body.

2. A ferrule according to claim 1, **characterized in that** the bottom of said truncated cone is surrounded by a flat part which functions as said adhesive barrier (15).

3. A ferrule according to claim 1, **characterized in that** the slope of said truncated cone is surrounded by an annular groove which functions as said adhesive barrier (15).

4. A ferrule according to claim 1, **characterized in that** the bottom of said truncated cone is surrounded by an annular groove which functions as said adhesive barrier (15).

## Patentansprüche

1. Hülse, die aufweist
- einen zylindrischen Körper, der eine Durchgangsbohrung (2) hat, die sich entlang seiner Achse erstreckt und eine Stirnfläche, wobei die Durchgangsbohrung (2) es ermöglicht, ein Ende eines Glasfaserkabels (20) einzuführen, so daß es aus der Stirnfläche hervorsteht, **dadurch gekennzeichnet**, daß
- der Endabschnitt des zylindrischen Körpers, welcher die Stirnfläche aufweist, die Gestalt eines Kegelstumpfes hat, dessen periphere Oberfläche mit einer koaxialen Klebersperre (15) versehen ist, um das Fließen des auf die Stirnfläche aufgebrachten Klebers zur Außenfläche des Zylinders zu verhindern.

2. Hülse nach Anspruch 1, **dadurch gekennzeichnet**, daß der Boden des Kegelstumpfes von einem flachen Abschnitt umgeben ist, welcher als Klebersperre (15) wirkt.

3. Hülse nach Anspruch 1, **dadurch gekennzeichnet**, daß die Schräge des Kegelstumpfes von einer Ringnut umgeben ist, welche als Klebersperre (15) wirkt.

4. Hülse nach Anspruch 1, **dadurch gekennzeichnet**, daß der Boden des Kegelstumpfes von einer Ringnut umgeben ist, welcher als Klebersperre (15) wirkt.

## Revendications

1. Embout, comprenant :
un corps cylindrique ayant un trou débouchant (2) suivant son axe et une face d'extrémité, le trou débouchant (2) permettant l'introduction d'une première extrémité d'un câble à fibre optique (20) de manière que l'extrémité dépasse de la face d'extrémité,
caractérisé en ce que :
la partie d'extrémité du corps cylindrique qui a la face d'extrémité possède une configuration de tronc de cône dont la surface périphérique a un barrage coaxial (15) destiné à empêcher l'écoulement de l'adhésif appliqué à la face d'extrémité le long de la surface cylindrique du corps cylindrique.

2. Embout selon la revendication 1, caractérisé en ce que la partie inférieure du tronc de cône est entourée par une partie plate qui joue le rôle d'un barrage (15) empêchant le passage de l'adhésif.

3. Embout selon la revendication 1, caractérisé en ce que la partie inclinée du tronc de cône est entourée d'une gorge annulaire qui joue le rôle d'un barrage (15) empêchant le passage de l'adhésif.

4. Embout selon la revendication 1, caractérisé en ce que la partie inférieure du tronc de cône est entourée d'une gorge annulaire qui joue le rôle d'un barrage (15) s'opposant au passage de l'adhésif.
